# EUROPEAN PATENT APPLICATION

(11) **EP 0 571 342 A1**
(43) Date of publication of application: **24.11.1993**
(21) Application number: 93830212.2
(22) Date of filing: 19.05.1993
(51) Int. Cl.: B65B 7/02

(54) **A method and a device for effecting a hermetic closure of bags with filler valve**

(30) Priority: 21.05.1992 IT BO920191; 21.05.1992 IT BO920192
(71) Applicant: COMES S.r.l., I-47040 Villa Verucchio (Forli) (IT)
(72) Inventor: Giordani, Giordano, I-21047 Saronno (Varese) (IT)
(74) Representative: Pederzini, Paolo

(57) **Abstract**

A bag (1) with a filler valve (2), essentially a sheath of heat sealable plastic material, is closed hermetically by first gripping the surfaces of the bag on either side of the corner (10) nearest the valve in such a way as to flatten the mouth (20), applying mechanical pressure to the appropriate point from opposite directions through intersecting circular trajectories (T, T') of which the radii are directed away from the bag, then securing the mouth by means of a heat generating device (30, 31) such as an ultrasonic sealer, which is incorporated together with the gripping mechanism (32, 33) into a single station; prior to the gripping and sealing steps, the filled bag can be tilted horizontal and compacted by applying pressure to the broader front and rear faces (11).

## Description

The present invention relates to a method by which bags with filler valves can be closed hermetically, in particular using ultrasonic sealing techniques. The invention also relates to a device for the implementation of such a method.

Conventionally, bags with filler valves are used for packaging, preserving and transporting powdered or granular material. Bags of the type in question, which assume a substantially parallelepiped shape when filled, are fashioned typically from a paper based material and fitted with a valve consisting in a flexible sheath, for example of heat-sealable material, secured with one open end positioned in close proximity to one corner edge of the bag and contained entirely within the spaced encompassed by the bag walls.

Once filled, a bag of this type can be closed by flattening the walls of the sleeve against one wall of the bag, exploiting the bulk of the contents. Besides being necessarily insecure, this type of closure cannot be adopted when the bag needs to be sealed hermetically.

Accordingly, the prior art embraces a variety of devices by means of which to secure the mouth of such a valve, for example utilizing adhesives or applying a heat seal.

The methods and devices adopted hitherto for heat sealing are not altogether satisfactory, since the seal applied to the valve can be less than perfect; employed in conjunction with conventional automatic bag filling equipment, moreover, such methods and devices can also have the effect of slowing down the operating cycle.

The object of the present invention is to overcome the drawbacks mentioned above.

The stated object is fully realized in a method of sealing a bag with a filler valve, as characterized in particular by claim 1 appended, which comprises the initial step of gripping the borders afforded by the mouth of the valve, before effecting a seal, wherein grip is generated by two mechanical forces impinging on the surfaces adjacent to the corner edge of the bag nearest the valve, applied along respective arcuate trajectories intersecting at the point of closure of the mouth, of which the radii are directed away from the bag. Since the forces applied in this manner tend to favour the action by which the borders of the valve are brought together gradually and smoothed along the line of the mouth, a hermetic seal can be achieved simply and with a high level of reliability.

To advantage, moreover, the filled bag is rotated before the borders of the valve are gripped, and the larger walls of the bag can also be compressed in such a way that the mouth is flattened initially by pressure applied through the contents of the bag to the relative outer surface of the valve.

The stated object is realized concurrently in a device for implementation of the method disclosed, which comprises a heat seal bar and a reaction bar constrained to rotate synchronously in opposite directions about two parallel axes and designed to impinge on the surfaces of the bag adjacent to the corner edge coinciding with the mouth of the valve, while gripping the borders of the mouth. Notable dependability is achieved in the subsequent sealing operation, since the action of the bars is designed to favour the process by which the borders of the valve are brought together gradually and smoothed along the line of the mouth.

The invention will now be described in detail, by way of example, with the aid of the accompanying drawings, in which:
- fig 1 illustrates the mouth of a bag with a filler valve, viewed in perspective.
- fig 2 is an enlarged sectional view of the filler valve of fig 1;
- fig 3 is a schematic side elevation of a device for implementation of the method according to the invention, illustrating the step in which a bag is filled;
- fig 4 is a schematic front elevation of the device shown in fig 3;
- fig 5 is a schematic side elevation of the device shown in fig 3, illustrating the completion of the filling step;
- fig 6 is a side elevation of the device shown in fig 3, illustrating the step of sealing a bag.

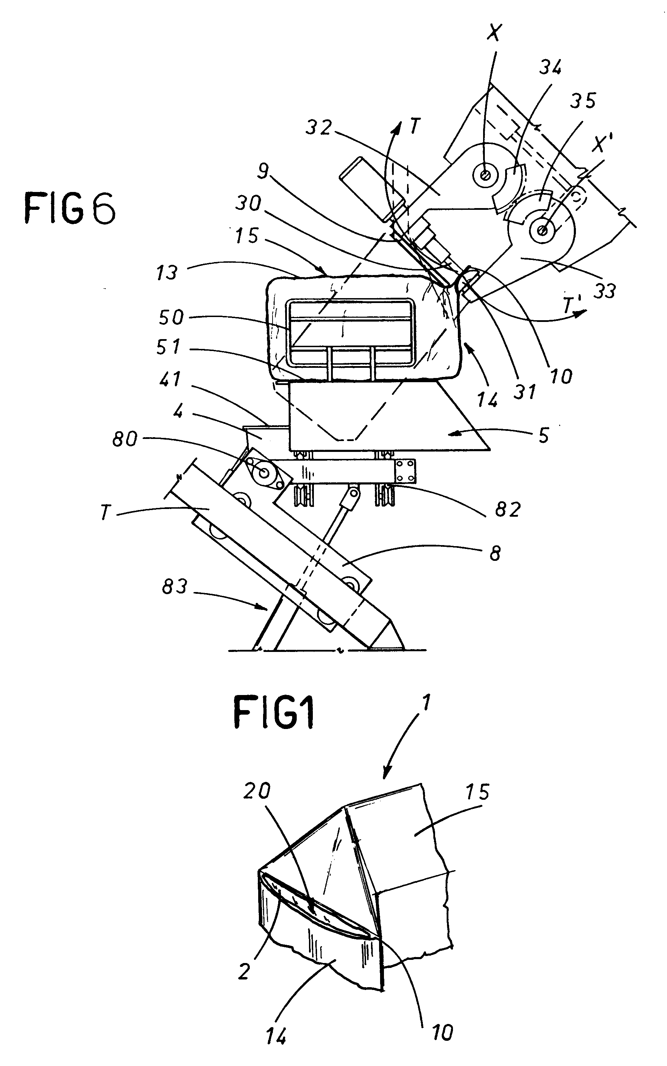

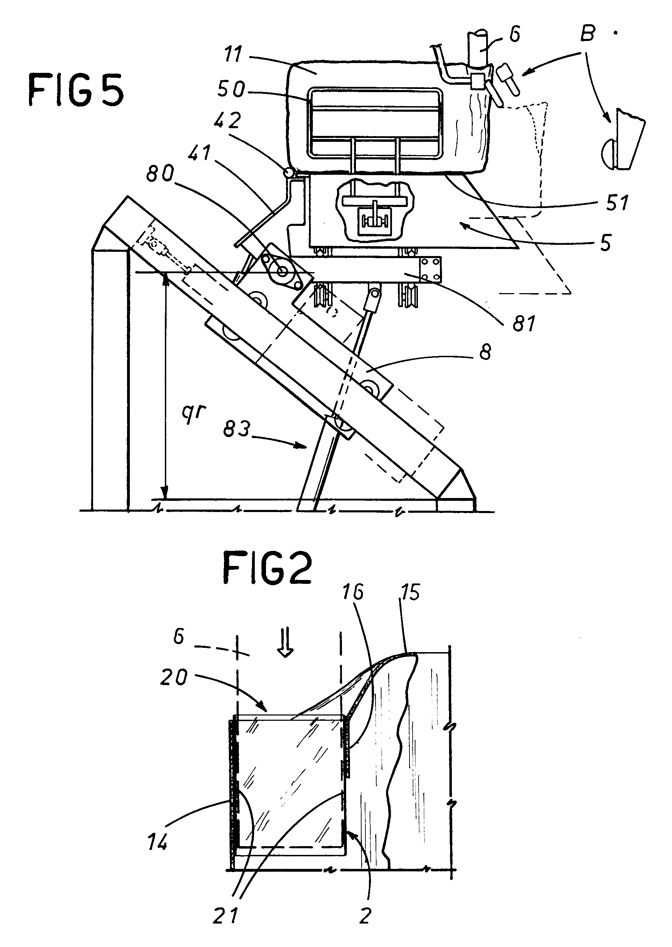

Figs 1 and 2 of the drawings show a paper sack or bag 1, for example of the type used for packaging powdered materials, provided with a filler valve 2 consisting in a sheath of heat-sealable plastic material, positioned internally of the bag 1, of which one open end or mouth 20 coincides with one of the corner edges of the bag, denoted 10. More exactly, and as shown in fig 2, the borders 21 of the mouth 20 afforded by the valve 2 are secured respectively to the internal surface of one of the narrow side walls 14 of the bag 1, and to a flap extending from the side wall 15 associated with the first side wall 14 by way of the corner edge 10.

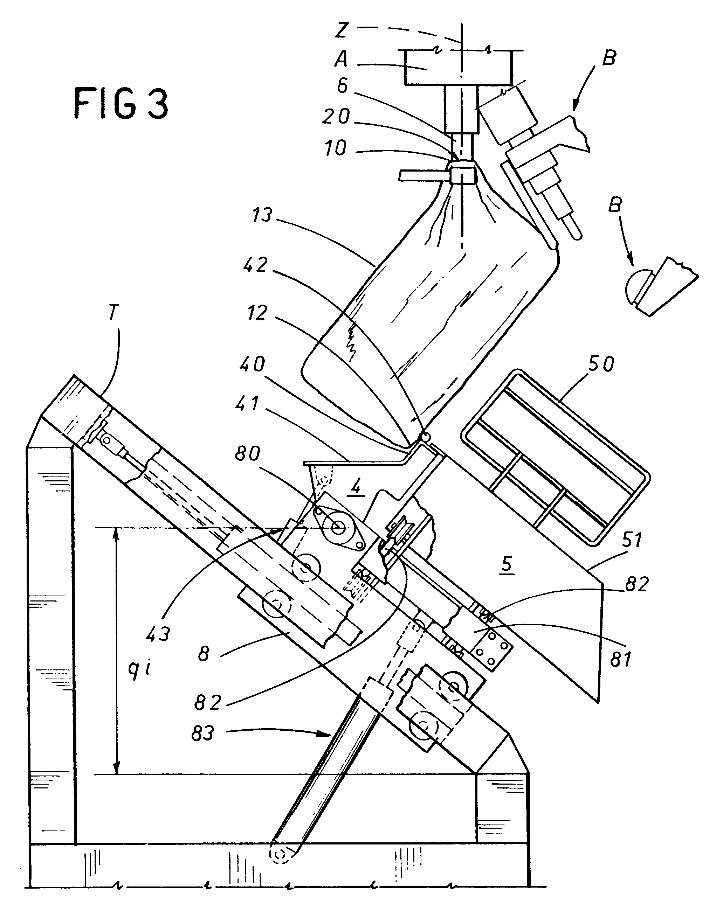

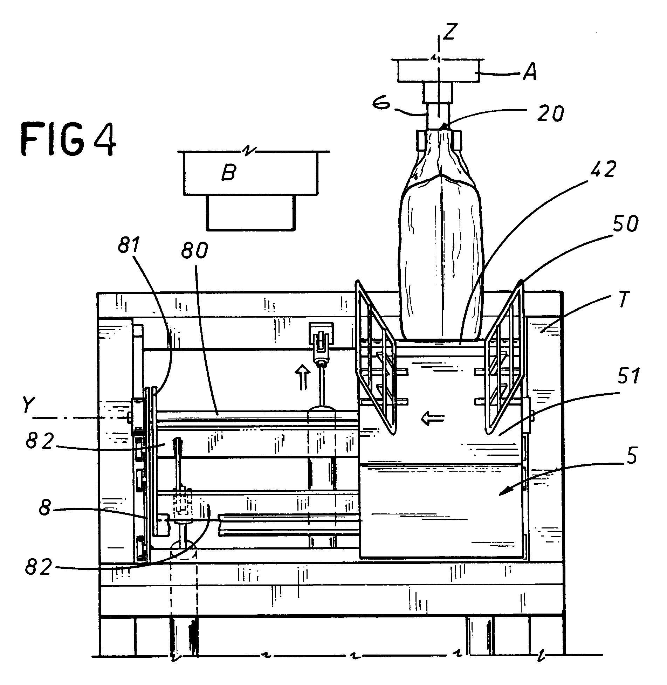

In figs 3 and 4 of the drawings, 8 denotes a first slide capable of movement on a frame T within an angled plane, and carrying a shaft 80 of which the axis is disposed transversely both to the direction of movement of the slide 8 and to a vertical axis denoted Z.

4 denotes a cradle pivotably associated with the transverse shaft 80 and subject to the action of a hydraulic actuator 43, which affords two mutually contiguous flat surfaces 40 and 41 disposed at an angle one in relation to another, and a cylindrical surface 42 extending parallel with the shaft 80 along one extremity.

Also associated with the first slide 8 are two members 81 disposed mutually parallel and at right angles to the axis Y of the transverse shaft 80, each anchored pivotably to the shaft 80 by one end, two guides 82 interconnected by the two pivoted members 81 and disposed parallel to the axis Y of the shaft 80, and two hydraulic actuators 83 to which the two pivoted members 81 are connected.

5 denotes a second slide 5 mounted to and capable of movement along the parallel guides 82 between a first position coinciding with a device A by which bags are filled, and a second position coinciding with a device B by which filled bags are sealed.

The second slide 5 affords a table 51 and two flat pivotable restraints 50 capable of rotation between a position of maximum divergence, in which each is angled in relation to the table 51, and a position of minimum divergence in which both are disposed substantially perpendicular to the table.

As discernible from the drawings, a bag 1 is filled with powdered or granulated material by means of a device A, conventional in embodiment, comprising a feed tube 6 insertable into the mouth 20 of the valve 2. While filling is in progress, the mouth 20 of the valve 2 is held tightly against the terminal portion of the feed tube 6, with the bag 1 assuming a position in which the longer side edges 13 hang obliquely to the vertical axis Z by reason of the weight of the material.

The bottom of the bag 1, or in effect the portion farthest removed from the corner edge 10 adjacent to the mouth 20 of the valve 2, is brought to rest on the cradle 4 with the relative corner edge 12 lying parallel to the cylindrical surface 42. More exactly, the bag 1 is supported from beneath by the cradle 4 in such a way that the angle compassed by the longer side edges 13 and the vertical axis Z is greater than that which would result were the bag 1 suspended freely from the feed tube 6; accordingly, a more uniform fill is ensured.

Throughout the filling step, during which the first slide 8 is positioned at a lower level denoted *qi*, the second slide 5 occupies a position adjacent to the cradle 4, such that the table 51 is disposed substantially parallel to the angled plane occupied by the frame T with one end in close proximity to the cylindrical surface 42 of the cradle 4; at this juncture, the restraints 50 are in their position of maximum divergence.

On completion of the filling operation (see fig 5), the first slide 8 traverses to a higher level *qr,* with the result that the bag 1 is tilted by the corresponding movement of the cradle 4 and made to rotate about the cylindrical surface 42, narrowing the angle between the longer side edges 13 and a horizontal datum. Accompanying the first slide 8 on its upward travel, the pivoted members 81 are also rotated about the transverse shaft 80 by the action of the two hydraulic actuators 83. In consequence, the cradle 4 is caused by the second slide 5 to rotate about the shaft 80 to the point where the table 51 is disposed substantially horizontal and occupied by the bag 1, which lies with the larger vertical faces 11 between the restraints 50.

The effect of this rotational movement is that the contents of the bag 1 are redistributed, entering into contact with the outer surface of the valve 2 which, being embodied in flexible plastic material, is pressed flat against the internal surface of the adjacent bag wall 14; thus, the borders 21 of the mouth 20 are drawn together.

The two restraints 50 are now rotated from their position of maximum divergence to that of minimum divergence, impinging on the two larger faces 11 and compacting the material within the bag 1 such that the parallelepiped shape becomes more regular. Next, the first slide 8 redescends to the lower level *qi*, whereupon the second slide 5 is traversed along the guides 82 and brought into alignment with the device B by which the mouth 20 of the valve 2 is to be sealed.

According to the present invention, and as shown in fig 6, the sealing device B essentially comprises a heat seal bar 30, for example an ultrasonic sealer, and a reaction bar 31, carried on two arms 32 and 33 interconnected by way of two sector gears 34 and 35 in such a way as to rotate synchronously and in mutual opposition about respective axes X and X' disposed parallel to a horizontal datum.

With the bag 1 positioned at the sealing device B, the corner edge 10 nearest the mouth of the valve 2 lies above the table, substantially parallel with the bars 30 and 31; also, the axes of rotation X and X' of the arms 32 and 33 are located outside the dimensional compass of the bag.

When drawn together from a configuration of maximum distance one from the other, the bars 30 and 31 are made to describe two circular trajectories T and T' such as will bring them respectively into contact with the two side walls 15 and 14 of the bag 1 that converge on the corner edge 10 and allow ultimately of gripping the portions of the two walls adjacent to the edge 10 together with the borders 21 of the mouth 20 afforded by the valve 2. With the bars 30 and 31 positioned at minimum distance one from the other, the planes perpendicular to the sealing and reaction surfaces are brought into coincidence and disposed at an angle of approximately 40° to the longer side edges 13 of the bag.

The bag 1 is duly sealed by applying heat which, in the case of the example described and illustrated, will be generated with ultrasonic vibrations.

To advantage, the sealing device also comprises an accompanying element 9 located beneath and rigidly associated with the heat seal bar 30, of which at least one portion extends parallel with the sealing surface and is of length not less than that of the corner edge 10. Moving together with and parallel to the heat seal bar 30, the accompanying element 9 engages the relative wall 15 of the bag 1 on the side of the seal opposite from the corner edge 10, thus expelling air from the bag 1 and favouring a firm closure of the borders 21 of the mouth 20. In effect, the action produced on the portions of the side walls 15 and 14 adjacent to the corner edge 10 by the bars 30 and 31 and the accompanying element 9, moving through circular trajectories of which the radii are directed away from the bag 1, is such that the borders 21 can be joined together firmly and completely and the subsequent heat seal rendered particularly reliable.

In addition, the sealing device B thus described affords the advantage of compactness, attributable in particular to the expedient of connecting the supporting arms 32 and 33 by means of sector gears. With the sealing operation completed, the bars 30 and 31 rotate away from one other, separating and thus releasing the mouth 20 of the bag 1; the two restraints 50 likewise are spread apart, rotating away from the larger faces 11 of the bag toward the position of maximum divergence. Finally, the second slide 5 is returned to the former angled position, by rotation of the arms 81 about the shaft 80 in the opposite direction to that aforementioned, such that the filled and sealed bag 1 can drop off.

The cycle is brought to completion by returning the second slide 5 to its initial position adjacent to the cradle 4, beneath the filling device A.

Advantageously, as one bag is traversed away from the filling station and sealed, a second bag can be attached to the tube 6 in readiness for filling, the cradle 4 having first been rotated about the transverse shaft 80 in the direction opposite to that of the movement occasioned by the ascent and rotation of the second slide 5 on completion of the filling operation.

The movements of the first and second slides 8 and 5, the cradle 4 and at least one of the heat seal arms 32 and 33 are produced by conventional means, for example by hydraulic actuators operated from a power unit.

## Claims

**1)** A method for effecting the hermetic closure of a bag (1) provided with a filler valve (2) consisting in a flexible sheath of heat sealable material located internally of the bag and secured with a mouth (20) disposed adjacent to at least one corner edge (10) of the bag,
characterized
in that it comprises the steps of:
- gripping the surfaces of the bag adjacent to the corner edge (10), in such a manner as to close the mouth (20), by way of two pressing forces directed onto the point of application through intersecting arcuate trajectories (T, T') of which the radii are directed away from the bag;
- sealing the mouth (20) of the valve (2) by means of a device (B) capable of transmitting heat and forming a part of means by which the two pressing forces are applied.

**2)** A method as in claim 1 comprising the further step, implemented before gripping the surfaces adjacent to the corner edge (10), of rotating the filled bag through an angle sufficient to flatten the outer surfaces of the valve (2) between the contents and the internal surface of the corresponding side wall (14) of the bag in such a way that the borders (21) of the mouth (20) are brought together.

**3)** A method as in claim 1 or 2 comprising the further step, implemented before gripping the surfaces adjacent to the corner edge (10), of compacting the contents of the bag by applying a compressive force to the larger faces (11).

**4)** A method as in preceding claims, wherein the steps of gripping and sealing the mouth (20) of the valve (2) are effected by at least one sealing bar (30), preferably generating an ultrasonic sealing action, and at least one reaction bar (31), rotatable synchronously in opposite directions about two axes (X, X') disposed parallel to the corner edge (10) and outside the dimensional compass of the bag, in such a way as to impinge on the surfaces adjacent to the corner edge and thereupon to grip and seal the borders (21) of the mouth (20) afforded by the valve (2).

**5)** A method as in claim 4, wherein the bars (30, 31) are rotatable from a position of maximum distance one from the other toward a position of minimum distance in which the planes normal to the sealing and reaction surfaces are brought into coincidence and disposed at an angle of approximately 40° to the longer side edges (13) of the bag.

**6)** A method as in preceding claims, wherein at least one of the surfaces adjacent to the corner edge (10) is subjected to a third pressing force applied in a direction parallel to one of the two pressing forces applied in the gripping step and impinging on an area farther from the corner edge (10) than that subjected to the parallel gripping force.

**7)** A method as in preceding claims, wherein the filled bag (1) is supported throughout the compacting, gripping and sealing steps by a table, positioned with the larger faces (11) vertically disposed and the corner edge (10) nearest the valve (2) raised above the table.

**8)** A method as in preceding claims, implemented by means of equipment comprising a filling device (A) affording at least one feed tube (6), to which a bag (1) is secured during the filling operation with the mouth (20) of the valve (2) tight against the tube and the longer side edges (13) disposed obliquely in relation to a vertical axis (Z), wherein the bottom corner edge (12) of the bag, lying farthest from the corner edge (10) adjacent to the mouth (20) of the valve (2), is supported during the filling operation by means consisting preferably in a cradle (4) capable of rotational movement about an axis (Y) disposed transversely to the vertical axis (Z) and parallel with the bottom corner edge (12) of the bag.

**9)** A method as in claim 8, wherein the filled bag (1) is moved closer to a device (B) for sealing the mouth (20) of the valve (2) by the further step of transferring the bag away from a filling station and into a sealing station outside the dimensional compass of the filling station.

**10)** A method as in claims 2 and 8, wherein the rotation of the filled bag (1) terminates with the bag lying on a slide (5) capable of movement between the filling device (A) and the sealing device (B).

**11)** A method as in claim 3 and 10, wherein the contents of the bag (1) are compacted by mechanical means consisting in at least two parallel restraints (50) of flat embodiment pivotably associated with the slide (5), by which the bag is also held in place on the slide during the movement from the filling device (A) to the sealing device (B).

**12)** A method as in claim 11 comprising the further steps, implemented after a bag has been filled, of:
- translating the slide (5) and the cradle (4) as one through a rectilinear trajectory and within an angled plane from a lower level (*qi*) to a higher level *(qr),* in such a way as to bring about the rotation of the bag (1), departing from an initial position in which the slide is angled in relation to horizontal datum and the flat restraints (50) occupy a position of maximum divergence one from the other;
- rotating the slide (5) and the cradle (4) about an axis (Y) disposed parallel with the bottom corner edge (12) of the bag (1), to advantage concurrently with the translation from the lower to the higher level, in such a way that the slide (5) is brought substantially horizontal and the bag (1) allowed to settle between the flat restraints (50);
- compacting the contents internally of the bag (1) by rotating the flat restraints (50) toward one another in such a way as to impinge compressively on the larger faces (11);
- moving the slide (5) into a position of alignment with the sealing device (B), preferably at a height corresponding to that of the lower level *(qi),* and effecting the step of sealing the mouth (20) of the valve (2);
- thereafter, rotating the flat restraints (50) in the direction opposite to the compacting direction to release the larger faces (11) of the bag (1);
- angling the slide (5) away from the horizontal, allowing the filled and sealed bag (1) to gravitate to a point remote from the slide;
- returning the slide (5) to the initial position.

**13)** A method as in claim 12, wherein the cradle (4) is rotated cyclically and in alternation about the axis (Y) parallel to the corner edge (12), rocking back and forth through a circular arc synchronously with the motion of the slide (5), in such a way as to support the bag (1) during the filling operation and assist its rotation thereafter.

**14)** A method as in claims 8 to 13, comprising the step of positioning an empty bag at the filling device (A) during the course of at least one of the steps in which a filled bag is transferred to the sealing device (B), sealed and removed, and the slide (5) returned to the initial position.

**15)** A device for effecting the hermetic closure of a bag (1) affording a filler valve (2) fashioned from heat sealable material, comprising means (30, 31) capable of movement one in relation to another of which the function is to seal the borders (21) of a mouth (20) afforded by the valve,
characterized
in that the sealing means (30, 31) are supported by means (32, 33) constrained to rotate in opposite directions about mutually parallel axes (X, X'), synchronously and in such a way that the sealing means (30, 31) are made to describe intersecting arcuate trajectories (T, T') of which the radii are directed away from the bag.

**16)** A device as in claim 15, wherein the sealing means (30, 31) are caused by their relative movements to impinge on the surfaces of the bag adjacent to one corner edge (10), and on reaching a position of minimum distance one from the other coinciding with the intersection of the respective trajectories (T, T'), to grip the borders (21) of the mouth afforded by the valve.

**17)** A device as in claim 15 or 16, wherein means (30, 31) capable of movement one in relation to another consist in at least one sealing bar (30) and at least one reaction bar (31), associated with means of support consisting in respective arms (32, 33) connected by way of sector gears (34, 35) engaged in mesh one with another.

**18)** A device as in claims 15 to 17, further comprising at least one forcing element (9) rigidly associated with at least one element of the sealing means (30, 31) in such a manner as to describe a trajectory concentric with and wider than the trajectory (T or T') described by the associated element of the sealing means.

**19)** A device as in claims 15 to 18 comprising means (5) by which to support a filled bag (1), capable of movement between a filling station and a sealing station and equipped with mutually opposed forcing means (50) by which the bag is flanked bilaterally and subjected to a compressing action applied over the larger faces (11).

**20)** A device as in claims 15 to 19, in equipment comprising a filling device (A) affording at least one feed tube (6), to which a bag (1) is secured during the filling operation with the mouth (20) of the valve (2) tight against the tube and the longer side edges (13) of the bag disposed obliquely in relation to a vertical axis (Z), wherein the bag is supported by means (4, 5) capable of movement from an initial position located at a lower level (*qi*) to a position located at a higher level *(qr),* and thus of occasioning a rotation of the filled bag (1) during the movement from the lower level (*qi*) to the higher level *(qr).*

**21)** A device as in claim 20, wherein means capable of movement from the lower level to the higher level comprise a cradle (4) and a slide (5), translatable as one through a rectilinear path within an angled plane and rotatable about an axis (Y) disposed normal to the vertical axis (Z) and parallel with a horizontal datum, of which the slide (5) is also capable of movement transversely in relation to the direction of translatory movement within the angled plane between a position of alignment with the filling device (A) and a position of alignment with a sealing device.

**22)** A device as in claims 19 to 21, wherein the slide (5) affords a table (51) and two pivotable flat restraints (50) capable of rotational movement between a position of maximum divergence, in which each is angled in relation to the table (51), and a position of minimum divergence in which both are disposed substantially perpendicular to the table.
